# EUROPÄISCHE PATENTSCHRIFT

(11) **EP 1 115 220 B1**
(45) Veröffentlichungstag und Bekanntmachung des Hinweises auf die Patenterteilung: **07.01.2009**
(21) Anmeldenummer: 00125722.9
(22) Anmeldetag: 24.11.2000
(51) Int. Cl.: B60R 16/02, G06F 1/14, H04J 3/06, H04L 12/42

(54) **Verfahren und Vorrichtung zum Austausch von Daten zwischen wenigstens zwei mit einem Bussystem verbundenen Teilnehmern**
Method and device for data exchange between at least two subscribers connected by a bus system
Procédé et dispositif d'échange de données entre au moins deux abonnés connectés par un système de bus

(30) Priorität: 05.01.2000 DE 10000304
(43) Veröffentlichungstag der Anmeldung: 11.07.2001
(73) Patentinhaber: ROBERT BOSCH GMBH, 70442 Stuttgart (DE)
(72) Erfinder: Weigl, Andreas, 76351 Linkenheim-Hochstetten (DE); Fuehrer, Thomas, 70839 Gerlingen (DE); Mueller, Bernd, Dr., 71229 Leonberg (DE); Hartwich, Florian, 72762 Reutlingen (DE); Hugel, Robert, 76199 Karlsruhe (DE)

(56) Entgegenhaltungen:
- EP-A- 0 560 122
- EP-A- 0 650 106
- US-A- 5 694 542
- BERWANGER J ET AL: "byteflight - Neues Hochleistungs-Datenbussystem für sicherheitsrelevante Anwendungen" AUTOMOTIVE ELECTRONICS HANDBOOK, Januar 2000 (2000-01), Seiten 60-67, XP002230813
- BANERJEE S ET AL: "A TIME DRIVEN CONTROLLER AREA NETWORK FOR RELIABLE AUTOMATION" INDIAN JOURNAL OF POWER AND RIVER VALLEY DEVELOPMENT, BOOKS AND JOURNALS PRIVATE, LTD, IN, Bd. 47, Nr. 1/2, Januar 1997 (1997-01), Seiten 6-8, XP001028233 ISSN: 0019-5537
- FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, 2000, Seiten 1-7, XP002905415

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Merkmalen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, daß sequentielle Senden aller Nachrichten gemäß der Priorität ihrer Identifier bzw. Kennungen. Für harte Echtzeitsysteme muß vorab eine Analyse der Laufzeiten und Buslasten für das gesamte System gemacht werden, um sicher zu gehen, daß alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, daß der Buszugriff bereits vorab durch Vergabe von Sendezeitpunkten geplant wird. Während der Laufzeit kann es somit zu keinen Kollisionen kommen. Ebenso wird aber eine Spitzenlast am Kommunikationsbus vermieden. Dabei ist der Bus also häufig nicht vollständig ausgelastet.

Beim TTP/C-Protokoll wird die Zeitinformation durch Zuordnung der Kommunikationsobjekte zur globalen Zeit und Abgleich der lokalen Zeit der einzelnen Teilnehmer durch fehlertolerante Mittelung aller Zeitinformationen verteilt.

Andere Bus-Protokolle leiten die Zeitinformation aus den einzelnen Bits einer Nachricht ab.

Damit ist nicht in jedem Fall ein kontrolliertes schellstmögliches Hochlaufen des Systems gewährleistet. Ebenso kann bei Ausfall des zeitgebenden Teilnehmers das gesamte System zusammenbrechen. Darüber hinaus ist eine automatische wiederaufnahme der Funktion nach dem Ausfall nicht immer sichergestellt.

Hierzu zeigt die die EP 0 650 106 A1 eine verteilte Uhrensynchronisation in einem Netzwerk. Dabei werden immer die Zeitinformationen aller Teilnehmer im Netzwerk verteilt. Abhängig von einer vorgegebenen Priorität werden dann alle Uhren aller Teilnehmer auf eine Zeit synchronisiert. Allerdings muss auch hier mit einer Prioritätenliste genechnet werden. Bei der Vielzahl der ständigen Zeitinformationen auf dem Netzwerk ist eine aufwendige Auswertung nötig.

Es zeigt sich, daß der Stand der Technik nicht in jeder Hinsicht optimale Ergebnisse zu liefern vermag.

### Vorteile der Erfindung

Die Erfindung beinhaltet somit vorteilhafter Weise ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und jeder Teilnehmer eine vorgebbare und/oder ermittelbare Zeitmarke enthält, wobei ein erster Teilnehmer in einer Funktion als Zeitgeber die Nachrichten zeitlich derart steuert, dass er wiederholt eine

Referenznachricht, die eine Zeitinformation des ersten Teilnehmers enthält, in einem vorgebbaren zeitlichen Abstand über den Bus überträgt und wenn die Zeitmarke des zweiten Teilnehmers erreicht ist ohne dass eine Refenznachricht des ersten Teilnehmers den zweiten Teilnehmer erreicht, der wenigstens zweite Teilnehmer die Funktion des Zeitgebers dadurch übernimmt indem er eine eigene Referenznachricht mit einer eigenen Zeitinformation über das Bussystem überträgt.

Dabei wird als zugrundeliegendes Bussystem bzw. Busprotokoll insbesondere zweckmässigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Vorteilhafterweise werden verschiedene Teilnehmer, insbesondere alle Teilnehmer, potentiell als Zeitgeber vorgesehen und diese Teilnehmer können eigene Referenznachrichten mit einer eigenen Zeitinformation über den Bus übertragen, wenn die eigene Zeitmarke des Teilnehmers errreicht ist ohne eine Referenznachricht emfangen zu haben.

Dabei werden die Nachrichten vorteilhafterweise durch einen ersten Teilnehmer zeitlich derart gesteuert, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden und der zeitliche Abstand in Zeitfenster vorgebbarer Länge unterteilt wird, wobei die Nachrichten in den Zeitfenstern übertragen werden.

Die Erfindung umfaßt vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfaßt also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmässigerweise unterbleibt in wenigstens einem Zeitfenster des ersten oder des zweiten Zyklus eine zyklische Nachrichtenübertragung. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Zweckmäßigerweise wird den Teilnehmern, die potentiell als Zeitgeber eingesetzt werden können eine Priorität bezüglich dieser Zeitgeberfunktion zugewiesen, wobei vorteilhafterweise zunächst der Teilnehmer die Funktion als Zeitgeber für den ersten Zyklus übernimmt dessen Zeitmarke zuerst erreicht ist ohne dass eine Referenznachricht bei diesem eingegangen ist und im folgenden ersten Zyklus des zweiten Zyklusses derjenige Teilnehmer die Funktion als Zeitgeber übernimmt, welcher die höchste Priorität besitzt. Dadurch ist zweckmässigerweise die Priorität der Zeitgeber konfigurierbar (logische Reihenfolge)

Durch vorgenannte Maßnahmen wird vorteilhafterweise die Zeitgeberfunktion und der zeitlich geordnete Kommunikationsablauf bzw. NAchrichtenaustausch nach der Initialisierung oder bei Ausfall eines Zeitgebers in einem zeitgesteuerten Bus-System, insbesondere CAN-Bus-System (TTCAN) sichergestellt.

Weiterhin von Vorteil ist das dabei entstehende kontrollierte, schnellstmögliche Hochlaufen des Systems aus Teilnehmern und Bussystem. Zweckmässigerweise wird ein System-Zusammenbruch bei Ausfall eines Zeitgebers (Knotens) vermieden und eine automatische Wiederaufnahme der Funktion nach Ausfall gewährleistet.

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

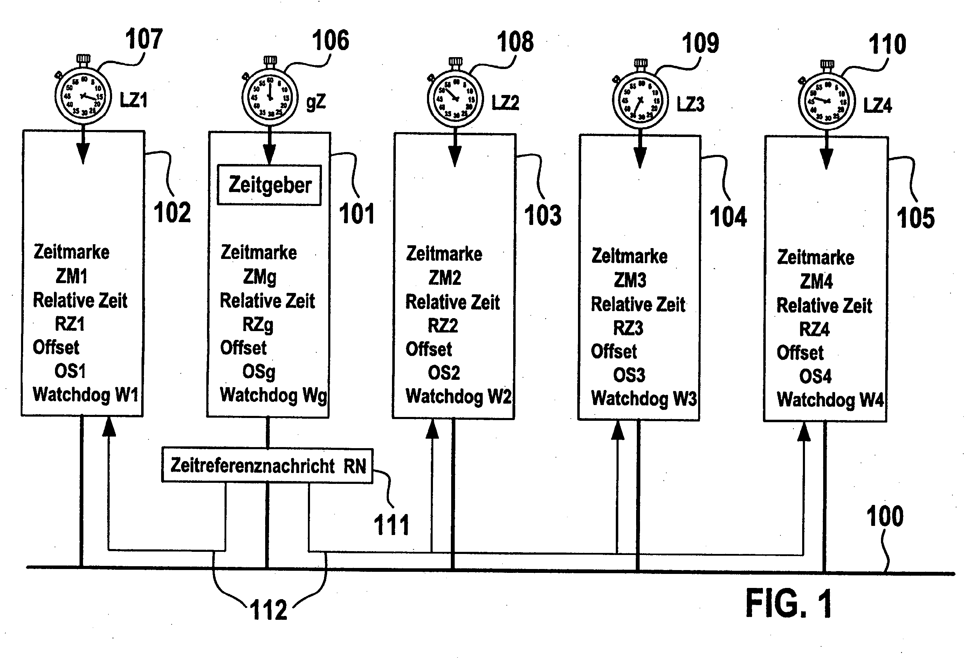

Dabei zeigt Figur 1 schematisch ein Bussystem mit mehreren Teilnehmern.

In Figur 2 ist der prinzipielle Ablauf der ersten Zyklen oder Basiszyklen und der zweiten Zyklen, der Gesamtzyklen über der Zeit dargestellt.

Figur 3 veranschaulicht im Detail die Anlage und Nachrichtenbelegung der Zeitfenster.

In Figur 4 wird dann ein Gesamtzyklus mit 7 Basiszyklen und diversen Sendegruppen der Nachrichten sowie arbitrierender Nachrichten dargestellt.

Figur 5 zeigt in Anlehnung an Figur 1 die Übertragung der Zeitgeberfunktion auf einen weiteren Teilnehmer, der als potentieller Zeitgeber ausgelegt ist.

Figur 6 offenbart in einem Zustandsdiagramm verschiedene Möglichkeiten für die Übergabe der Zeitgeberfunktion unter Berücksichtigung der Zeitgeber-Prioritäten.

### Beschreibung der Ausführungsbeispiele

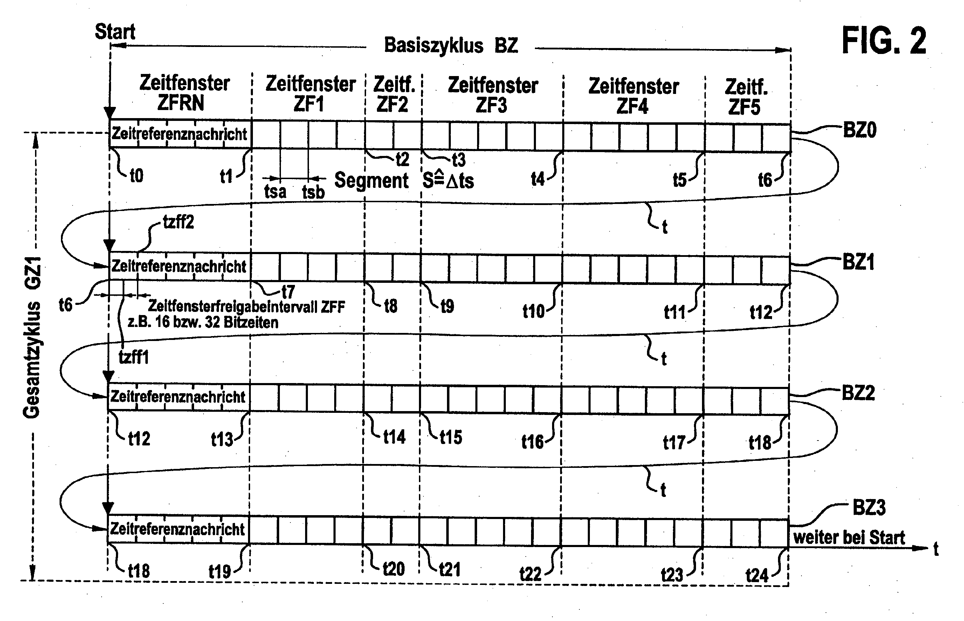

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten lZ1 bis lZ4 wird berücksichtigt und effizient umgesetzt.

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein interners Mittel, wie eine Uhr, Zähler, Taktgenerator, etc.oder extern zu dem jeweiligen Teilnehmer übertragen werden kann. Die jeweilige lokale Zeitbasis lZ1 bis lZ4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit lZ (lZ1 bis lZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit lZ (lZ1 bis lZ4) und dem lokalen Offset OS1 bis OS4 und OSg wenn OSg ≠ 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

### Lokale Zeitbasis und die Globale Zeit

Lokale Zeitbasis: Die lokale Zeitbasis ist ein Zähler, z.B. 16-bit aufwärtszählend, der lediglich durch einen HW-Reset beeinflußt werden darf. Die lokale Zeitbasis ist in jedem Knoten implementiert.

Referenzmarken Zwischenregister: Bei jedem angenommenen SOF wird das Zwischenregister mit der lokalen Zeitbasis geladen.

Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.

Zeitgeber-Referenzmarke: Das ist die von den Zeitnehmern empfangene Referenzmarke des Zeitgebers in der Referenznachricht.

Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist-durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht.
Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Wartchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

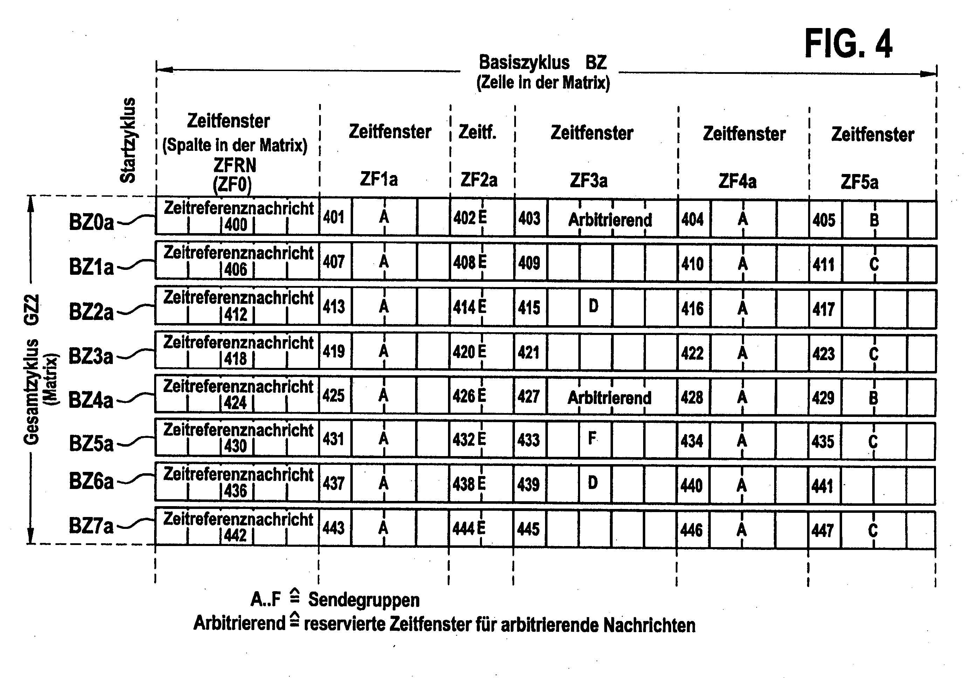

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muß von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ 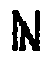 ) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Ats = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispeilsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

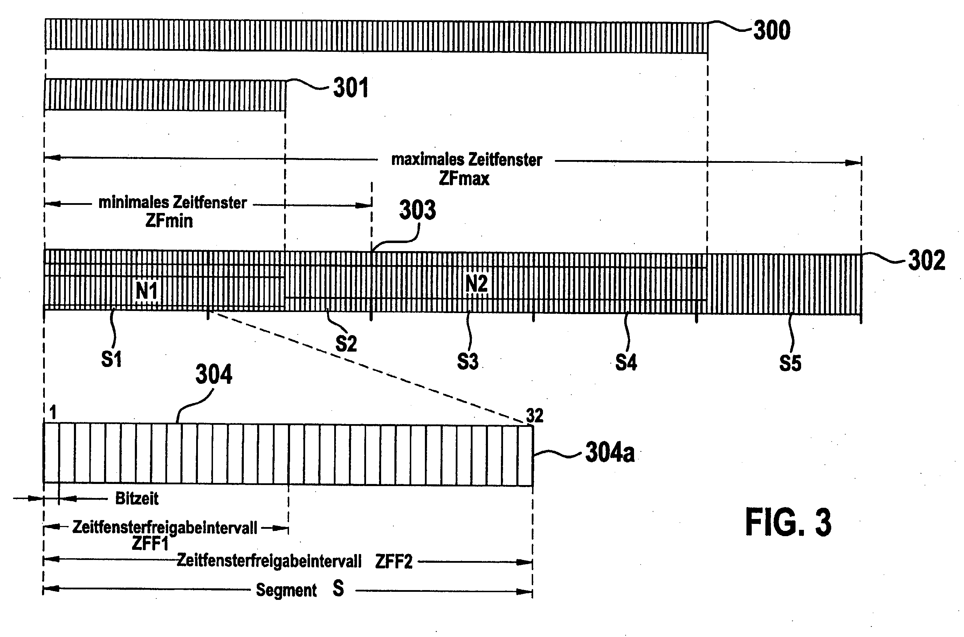

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrössen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und Arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2^{m} = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZF0 bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409,421,441,417,445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401,407,413,419,425,431,437,443 und 404, 410, 416, 422, 428, 434, 440, 446. Innerhalb einer Sendegruppe kann ein Nachrichtenobjekt (eines Zeitfensters) mehrfach gesendet werden. Die Periode einer Nachricht innerhalb einer Sendegruppe muß eine Zahl 2^{l} sein, wobei gilt: 1 <= m.

Das Nachrichtenobjekt bzw. die Nachricht entspricht dem Nachrichtenobjekt des Busses, insbesondere in CAN, und umfaßt den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZF0, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wievielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmässigerweise ausgeschaltet.

Im weiteren wird nun nochmals die Nachrichtenübertragung-Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten und arbitrierende also spontane Nachrichten unterschieden.

### Exklusive Nachrichtenobjekte (periodische Nachrichten) :

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten) :

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, daß jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

In einem TTCAN-System beziehen sich alle Zeitfenster, in denen Nachrichten übertragen werden auf einen Referenzzeitpunkt, der am Anfang eines Basiszyklus von einem Referenzgeber allen Teilnehmern mitgeteilt wird.

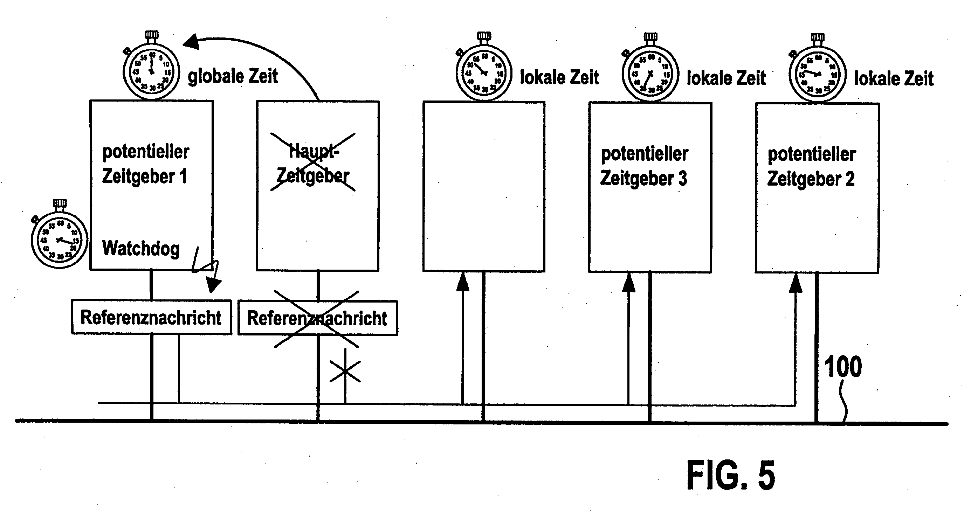

Figur 5 zeigt dazu ein System in Anlehnung an Figur 1. Der Zeitgeber besteht z.B. aus einem lokalen (z.B. 16-Bit breiten) Zähler (der lokalen oder globalen Zeitbasis), einem (z.B. 16-Bit breiten) Offset-Register, einem (z.B. 16-Bit breiten) Referenz-Register und einer Watchdog-Zeitmarke.

In einem System gibt es mehrere "potentielle" Zeitgeber, die in einer vorgegebenen Rangfolge eine Referenznachricht senden und damit Zeitgeber werden können.

Beim Hochlauf des Systems nach dem Einschalten kann jeder dafür vorgesehene Knoten die Zeitgeberfunktion übernehmen.

Dazu wird der lokale Zähler gestartet und der Zählerstand in das Referenz-Register geladen. Der lokale Zähler läuft, und entweder wird die Watchdog-Marke erreicht, oder es wird von einem anderen Knoten eine Referenzbotschaft empfangen.

Wird die Watchdog-Marke erreicht bevor eine Referenzbotschaft empfangen wurde, so übernimmt dieser Knoten die Zeitgeberfunktion, indem er eine Referenzbotschaft sendet und damit einen Basiszyklus startet.

Empfängt der Knoten vor Erreichen der Watchdog-Marke eine Referenzbotschaft von einem anderen Knoten, so synchronisiert er sich auf diese Referenz und prüft, ob seine eigene Zeitgeber-Priorität höher oder niedriger ist.

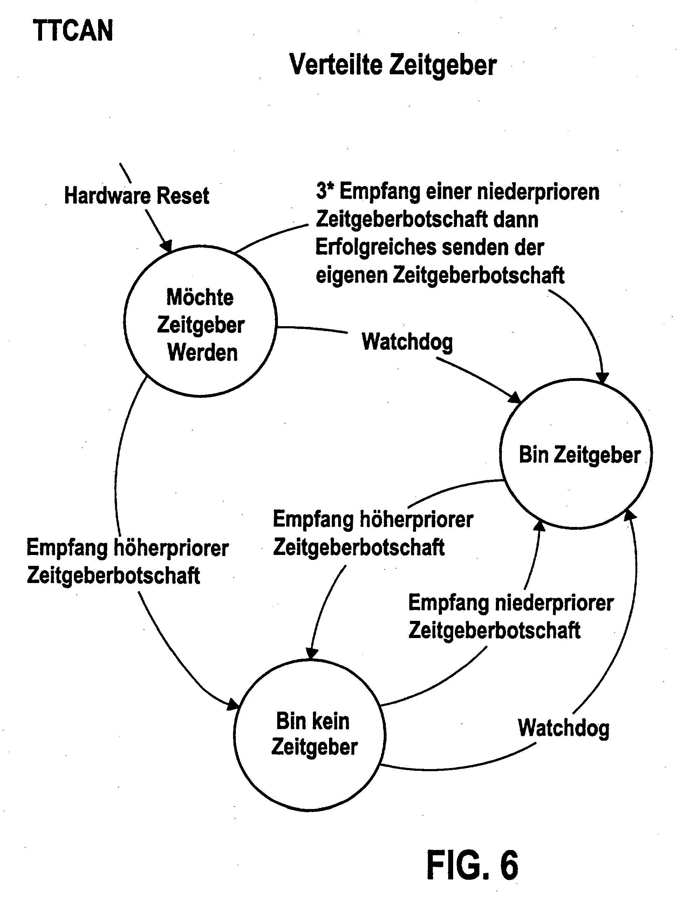

Unterschiedlichen Möglichkeiten dabei sind in dem Zustandsdiagramm in Figur 6 dargestellt. Im Falle niedrigerer Priorität arbeitet dieser Knoten als normaler "potentieller", aber nicht aktiver Zeitgeber weiter.

Ist aber seine Zeitgeber-Priorität höher als die der empfangenen Referenzbotschaft, so versucht er ab dem nächsten Referenzzeitpunkt Zeitgeber zu werden.

Dabei gibt es dann folgende Fälle:
a) Sendet der höherpriore Zeitgeber die Referenzbotschaft vor dem aktuellen Zeitgeber, so übernimmt er die Funktion des Zeitgebers und der bisherige Zeitgeber zieht sich zurück, da er die höher priore Referenzbotschaft sieht.
b) Senden beide Zeitgeber gleichzeitig, so kommt der Arbitriermechanismus des CAN-Protokolls zum tragen und der höherpriore Zeitgeber übernimmt die Funktion des Zeitgebers, da die Priorität mit dem Identifier der Referenzbotschaft verknüpft ist.
c) Kommt der höherpriore Zeitgeber zu spät, so versucht er in einem System ohne Driftkorrektur seine Referenzbotschaft so lange zu senden, bis sie durchkommt oder er eine noch höher priore empfängt. Eine Verschiebung der globalen Zeit wird dabei in Kauf genommen. Driftkorrektur bedeutet abgleichen der Ganggenauigkeit der in einem TTCAN-System verteilten lokalen Uhren um Sende- und Empfangszeitpunkte genauer zu synchronisieren. Bei einem System mit einer Driftkorrektur wird zum nächstmöglichen Referenzzeitpunkt wieder versucht, die Zeitgeber-Funktion zu übernehmen. Durch einen geeigneten Driftkorrekturalgorithmus wird sichergestellt, daß spätestens beim zweiten Basiszyklus der höherpriore Zeitgeber seine Referenzbotschaft nicht später als der aktuelle Zeitgeber auf den Bus legt und damit die Arbitrierung gewinnt und die Zeitgeberfunktion übernimmt.

Fällt der aktuelle Zeitgeber aus, so läuft in den "potentiellen" Zeitgebern der Watchdog abhängig von deren Priorität unterschiedlich schnell ab und der Knoten, dessen Watchdog als erster abläuft, übernimmt die Zeitgeberfunktion (s.o.)

Damit der Übergang von einem Zeitgeber zum anderen möglichst stetig in der Zeit ist, kann jeder Zeitgeber seine Sicht der globalen Zeit in seiner Referenzbotschaft übertragen.

Die Begriffe Zeitreferenznachricht, Referenznachricht, Referenzbotschaft und Zeitreferenzbotschaft sind gleichbedeutend. Eine Referenzbotschaft mit Zeitinformation bzw. die Zeitinformation in der Referenzbotschaft wird dann als Zeitgeberbotschaft (vgl. Figur 6) bezeichnet.

## Patentansprüche

1. Verfahren zum Austausch von Daten.in Nachrichten zwischen wenigstens zwei Teilnehmern (101-105), welche mittels eines Bussystems (100) verbunden sind, wobei die, die Daten enthaltenden Nachrichten durch die Teilnehmer über das Bussystem übertragen werden, wobei wenigstens zwei Teilnehmer (101, 102) eine Funktion als Zeitgeber für das Bussystem übernehmen können und jeder dieser Teilnehmer, die die Zeitgeberfunktion übernehmen können eine Zeitmarke enthält, wobei ein erster Teilnehmer (101) als Zeitgeber die Nachrichten zeitlich derart steuert, dass er wiederholt eine Referenznachricht (RN), mit einer speziellen Kennung, in einem vorgebbaren zeitlichen Abstand (BZ) über den Bus überträgt, wobei die Referenznachricht eine erste Zeitinformation des ersten Teilnehmers enthält, wobei der zeitliche Abstand in Zeitfenster (ZF1-ZF5) vorgebbarer Länge unterteilt wird, wobei die Nachrichten in den Zeitfenstern (ZF1-ZF5) übertragen werden und wenn die Zeitmarke des zweiten Teilnehmers erreicht ist ohne dass eine Referenznachricht (RN) des ersten.Teilnehmers (101) den zweiten Teilnehmer (102) erreicht, der wenigstens zweite Teilnehmer die Funktion des Zeitgebers **dadurch** übernimmt, dass er eine eigene zweite Referenznachricht, ebenfalls mit einer speziellen Kennung und mit einer eigenen zweiten Zeitinformation über das Bussystem (100) überträgt, so dass immer nur ein Teilnehmer eine Referenznachricht (RN) und eine Zeitinformation auf dem Bussystem überträgt, wobei sich aus der Referenznachricht der zeitliche Abstand (BZ) für die Zeitfenster ergibt und sich aus der Zeitinformation in der Referenznachricht die globale Zeit (gZ) für das Bussystem ergibt.

2. Verfahren nach Anspruch 1, **dadurch gekennzeichnet, dass** alle Teilnehmer (101-105) potentiell als Zeitgeber vorgesehen werden können und dass diese Teilnehmer eigene Referenznachrichten mit einer eigenen Zeitinformation über den Bus übertragen, wenn die eigene Zeitmarke des Teilnehmers erreicht ist ohne eine Referenznachricht empfangen zu haben.

3. Verfahren nach Anspruch 1, **dadurch gekennzeichnet, dass** eine Referenznachricht (RN) und die nachfolgenden Zeitfenster bis zur nächsten Referenznachricht zu einem ersten Zyklus (BZ) vorgebbarer Struktur zusammengefasst werden, wobei die Struktur der Länge, Anzahl und zeitlichen Position der auf die Referenznachricht folgenden Zeitfenster (ZF1-ZF5) in dem zeitlichen Abstand entspricht.

4. Verfahren nach Anspruch 1, **dadurch gekennzeichnet, dass** eine Referenznachricht (RN) und die nachfolgenden Zeitfenster (ZF1-ZF5) bis zur nächsten Referenznachricht zu einem ersten Zyklus (BZ) vorgebbarer Länge zusammengefasst werden.

5. Verfahren nach Anspruch 1 und 3, **dadurch gekennzeichnet, dass** mehrere erste Zyklen (BZ0-BZ3) gleicher Struktur zu einem zweiten Zyklus (GZ1) zusammengefasst werden, wobei in dem zweiten Zyklus auch Nachrichten in Zeitfenstern wiederholt übertragen werden, deren zeitlicher Abstand größer ist als die zeitliche Länge des ersten Zyklus (BZ).

6. Verfahren nach Anspruch 1 oder 2, **dadurch gekennzeichnet, dass** den Teilnehmern (101, 102), die als Zeitgeber einsetzbar sind eine Priorität bezüglich der Funktion als Zeitgeber zugewiesen wird.

7. Verfahren nach Anspruch 5 und 6, **dadurch gekennzeichnet, dass** zunächst der Teilnehmer die Funktion als Zeitgeber für den ersten Zyklus übernimmt dessen Zeitmarke zuerst erreicht ist ohne dass eine Referenznachricht bei diesem eingegangen ist und im folgenden ersten Zyklus des zweiten Zyklus derjenige Teilnehmer die Funktion als Zeitgeber übernimmt, welcher die höchste Priorität besitzt

8. Verfahren nach Anspruch 1, **dadurch gekennzeichnet, dass** in den Zeitfenstern Nachrichten zyklisch übertragen werden.

9. Verfahren nach einem der Ansprüche 3 bis 5, **dadurch gekennzeichnet, dass** in wenigstens einem Zeitfenster(ZF1-ZF5) des ersten Zyklus (BZ) oder des zweiten Zyklus (GZ1) eine zyklische Nachrichtenübertragung unterbleibt und in diesem Zeitfenster arbitrierende Nachrichten übertragen werden.

10. Vorrichtung mit wenigstens zwei Teilnehmern (101-105) und einem Bussystem (100) zum Austausch von Daten in Nachrichten zwischen den wenigstens zwei Teilnehmern, welche mittels des Bussystems verbunden sind, wobei die, die Daten enthaltenden Nachrichten durch die Teilnehmer über das Bussystem übertragen werden und die Vorrichtung derart ausgestaltet ist, dass wenigstens zwei Teilnehmer (101, 102) eine Funktion als Zeitgeber für das Bussystem übernehmen können und jeder dieser Teilnehmer, die die Zeitgeberfunktion übernehmen können eine Zeitmarke enthält, wobei ein erster Teilnehmer (101) als Zeitgeber dies Nachrichten zeitlich derart steuert, dass er wiederholt eine Referenznachricht (RN), mit einer speziellen Kennung, in einem vorgebbaren zeitlichen Abstand (BZ) über den Bus überträgt, wobei die Referenznachricht eine erste Zeitinformation des ersten Teilnehmers enthält, wobei der zeitliche Abstand in Zeitfenster (ZF1-ZF5) vorgebbarer Länge unterteilt wird, wobei die Nachrichten in den Zeitfenstern (ZF1-ZF5) übertragen werden und wenn die Zeitmarke des zweiten Teilnehmers erreicht ist ohne dass eine Referenznachricht (RN) des ersten Teilnehmers (101) den zweiten Teilnehmer (102) erreicht, der wenigstens zweite Teilnehmer die Funktion des Zeitgebers **dadurch** übernimmt, dass er eine eigene zweite Referenznachricht ebenfalls mit einer speziellen Kennung und mit einer eigenen zweiten Zeitinformation über das Bussystem (100) überträgt, so dass immer nur ein Teilnehmer eine Referenznachricht (RN) und eine Zeitinformation auf dem Bussystem überträgt, wobei sich aus der Referenznachricht der zeitliche Abstand (BZ) für die Zeitfenster ergibt und sich aus der Zeitinformation in der Referenznachricht die globale Zeit (gZ) für das Bussystem ergibt.

## Claims

1. Method for the exchange of data in messages between at least two subscribers (101-105) who are connected by means of a bus system (100), wherein the messages containing the data are transmitted by the subscribers via the bus system, wherein at least two subscribers (101, 102) can take over a function as timer for the bus system and each of these subscribers who can take over the timer function contains a time stamp, wherein a first subscriber (101), as timer, controls the timing of the messages in such a manner that he repeatedly transmits a reference message (RN) with a special identifier within a predeterminable time interval (BZ) via the bus, wherein the reference message contains first time information of the first subscriber, wherein the time interval is subdivided into time windows (ZF1-ZF5) of predeterminable length, wherein the messages are transmitted in the time windows (ZF1-ZF5) and when the time stamp of the second subscriber is reached without a reference message (RN) of the first subscriber (101) reaching the second subscriber (102), the at least second subscriber takes over the function of the timer by transmitting his own second reference message, also with a special identifier and with its own second time information via the bus system (100) so that only one subscriber ever transmits a reference message (RN) and time information on the bus system, the reference message producing the time interval (BZ) for the time window and the time information in the reference message producing the global time (gZ) for the bus system.

2. Method according to Claim 1, **characterized in that** all subscribers (101-105) can be potentially provided as timers and that these subscribers transmit their own reference messages with their own time information via the bus when the subscriber's own time stamp is reached without having received a reference message.

3. Method according to Claim 1, **characterized in that** a reference message (RN) and the subsequent time windows up to the next reference message are combined to form a first cycle (BZ) of predeterminable structure, the structure corresponding to the length, number and position in time of the time windows (ZF1-ZF5) following the reference message in the time interval.

4. Method according to Claim 1, **characterized in that** a reference message (RN) and the subsequent time windows (ZF1-ZF5) up to the next reference message are combined to form a first cycle (BZ) of predeterminable length.

5. Method according to Claim 1 and 3, **characterized in that** several first cycles (BZ0-BZ3) of identical structure are combined to form a second cycle (GZ1), wherein in the second cycle, messages are also repeatedly transmitted in time windows, the time interval of which is greater than the length in time of the first cycle (BZ).

6. Method according to Claim 1 or 2, **characterized in that** a priority with respect to the function as timer is assigned to the subscribers (101, 102) who can be used as timers.

7. Method according to Claim 5 and 6, **characterized in that** firstly, the timer whose time stamp is reached first without him having received a reference message takes over the function as timer for the first cycle and in the subsequent first cycle of the second cycle, the subscriber who has the highest priority takes over the function as timer.

8. Method according to Claim 1, **characterized in that** messages are transmitted cyclically in the time windows.

9. Method according to one of Claims 3 to 5, **characterized in that** in at least one time window (ZF1-ZF5) of the first cycle (BZ) or of the second cycle (GZ1), there is no cyclic message transmission and arbitrating messages are transmitted in this time window.

10. Device with at least two subscribers (101-105) and a bus system (100) for the exchange of data in messages between the at least two subscribers who are connected by means of the bus system, wherein the messages containing the data are transmitted by the subscribers via the bus system and the device is arranged in such a manner that at least two subscribers (101, 102) can take over a function as timer for the bus system and each of these subscribers who can take over the timer function contains a time stamp, wherein a first subscriber (101), as timer, controls the timing of the messages in such a manner that he repeatedly transmits a reference message (RN) with a special identifier within a predeterminable time interval (BZ) via the bus, wherein the reference message contains first time information of the first subscriber, wherein the time interval is subdivided into time windows (ZF1-ZF5) of predeterminable length, wherein the messages are transmitted in the time windows (ZF1-ZF5) and when the time stamp of the second subscriber is reached without a reference message (RN) of the first subscriber (101) reaching the second subscriber (102), the at least second subscriber takes over the function of the timer by transmitting his own second reference message also with a special identifier and with its own second time information via the bus system (100) so that only one subscriber ever transmits a reference message (RN) and time information on the bus system, the reference message producing the time interval (BZ) for the time window and the time information in the reference message producing the global time (gZ) for the bus system.

## Revendications

1. Procédé d'échange de données dans des messages échangés entre au moins deux abonnés (101-/à 105) qui sont reliés au moyen d'un système de bus (100), dans lequel
- les messages contenant les données sont échangés par les abonnés par l'intermédiaire du système de bus,
- au moins deux abonnés (101, 102) pouvant assurer la fonction d'une horloge du système de bus et chacun de ces abonnés qui peuvent assurer la fonction d'une horloge contenant un repère temporel,
- un premier abonné (101) servant d'horloge commandant temporellement les messages en répétant un message de référence (RN) qui présente une caractéristique spéciale en le transmettant sur le bus à un écart temporel prédéterminé (BZ),
- le message de référence contenant une première information temporelle du premier abonné,
- l'écart temporel étant divisé en fenêtres temporelles (ZF1-ZF5) de longueur prédéterminée,
- les messages étant transmis dans les fenêtres temporelles (ZF1-ZF5) et si le repère temporel du deuxième abonné est atteint sans qu'un message de référence (RN) du premier abonné (101) ait atteint le deuxième abonné (102), le ou les deuxièmes abonnés reprennent la fonction d'horloge en transmettant par le système de bus (100) un deuxième message de référence qui leur est propre et qui est également doté d'une caractéristique spéciale et d'une deuxième information de temps qui leur est propre, de telle sorte qu'un seul abonné à la fois transmet sur le système de bus un message de référence (RN) et une information temporelle,
- l'écart temporel (BZ) entre les fenêtres temporelles découlant du message de référence et le temps global (gZ) du système de bus découlant de l'information temporelle que contient le message de référence.

2. Procédé selon la revendication 1, **caractérisé en ce que** tous les abonnés (101-105) peuvent potentiellement servir d'horloge et **en ce que** ces abonnés transmettent par le bus leurs propres messages de référence qui contiennent une information temporelle qui leur est propre si le repère temporel propre à l'abonné est atteint sans qu'il ait reçu un message de référence.

3. Procédé selon la revendication 1, **caractérisé en ce qu'**un message de référence (RN) et les fenêtres temporelles qui suivent jusqu'au message de référence suivant sont rassemblés en un premier cycle (BZ) de structure prédéterminée, la structure correspondant à la longueur, au nombre et à la position temporelle des fenêtres temporelles (ZF1-ZF5) qui suivent à l'écart temporel le message de référence.

4. Procédé selon la revendication 1, **caractérisé en ce qu'**un message de référence (RN) et les fenêtres temporelles (ZF1-ZF5) qui suivent jusqu'au message de référence suivant sont rassemblés en un premier cycle (BZ) de longueur prédéterminée.

5. Procédé selon les revendications 1 et 3, **caractérisé en ce que** plusieurs premiers cycles (BZO-BZ3) de même structure sont rassemblés en un deuxième cycle (GZ1), des messages étant également transmis à répétition dans le deuxième cycle, dans des fenêtres temporelles dont l'écart temporel est plus grand que la longueur temporelle du premier cycle (BZ).

6. Procédé selon les revendications 1 ou 2, **caractérisé en ce qu'**un ordre de priorité de fonctionnement comme horloge est dévolu aux abonnés (101, 102) qui peuvent être utilisés comme horloge.

7. Procédé selon les revendications 5 et 6, **caractérisé en ce que** l'abonné dont le repère temporel a été atteint en premier sans qu'il ait reçu un message de référence assure le premier la fonction d'horloge pendant le premier cycle et en ce l'abonné qui présente la priorité la plus élevée assure la fonction d'horloge dans le premier cycle qui suit le deuxième cycle.

8. Procédé selon la revendication 1, **caractérisé en ce que** les messages sont transmis cycliquement dans les fenêtres temporelles.

9. Procédé selon l'une des revendications 3 à 5, **caractérisé en ce que** la transmission cyclique des messages est interrompue dans au moins une fenêtre temporelle (ZF1-ZF5) du premier cycle (BZ) ou du deuxième cycle (GZ1) et **en ce que** des messages d'arbitrage sont transmis dans cette fenêtre temporelle.

10. Dispositif qui présente au moins deux abonnés (101-105) et un système de bus (100) qui permet aux deux ou plusieurs abonnés reliés au moyen du système de bus d'échanger des données par des messages, les messages qui contiennent les données étant transmis par les abonnés par l'intermédiaire du système de bus et le dispositif étant configuré de telle sorte qu'au moins deux abonnés (101, 102) peuvent assurer la fonction d'horloge du système de bus et que chacun de ces abonnés qui peuvent assurer la fonction d'horloge contient un repère temporel,
- un premier abonné (101) qui sert d'horloge commandant temporellement les messages en transmettant à répétition et à un écart temporel (BZ) prédéterminé un message de référence (RN) qui contient une caractéristique spéciale,
- le message de référence contenant une première information temporelle du premier abonné,
- l'écart temporel étant divisé en fenêtres temporelles (ZF1-ZF5) de longueur prédéterminée,
- les messages étant transmis dans les fenêtres temporelles (ZF1-ZF5) et si le repère temporel du deuxième abonné est atteint sans qu'un message de référence (RN) du premier abonné (101) ait atteint le deuxième abonné (102), le ou les deuxièmes abonnés assurent la fonction d'horloge en transmettant sur le système de bus (100) un deuxième message de référence qui leur est propre et qui présente également une caractéristique spéciale et une deuxième information temporelle qui leur est propre, de telle sorte qu'un seul abonné à la fois transmet sur le système de bus un message de référence (RN) et une information temporelle,
- l'écart temporel (BZ) pour les fenêtres temporelles découlant du message de référence et le temps global (gZ) du système de bus découlant de l'information temporelle que contient le message de référence.
